(19)

Europäisches
Patentamt

European
Patent Office

Office européen
des brevets

(11) **EP 2 632 028 A2**

(12) **EUROPEAN PATENT APPLICATION**

(43) Date of publication:
**28.08.2013 Bulletin 2013/35**

(51) Int Cl.:
*H02K 3/28* (2006.01)

(21) Application number: **13156129.2**

(22) Date of filing: **21.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.02.2012 JP 2012037893
09.05.2012 JP 2012107565**

(71) Applicant: **Kabushiki Kaisha Toshiba
Tokyo 105-8001 (JP)**

(72) Inventors:
• **Tokumasu, Tadashi
Tokyo, 105-8001 (JP)**

• **Tsujikawa, Kazuma
Tokyo, 105-8001 (JP)**
• **Ichimonji, Masayuki
Tokyo, 105-8001 (JP)**
• **Otaka, Toru
Tokyo, 105-8001 (JP)**
• **Hiramatsu, Daisuke
Tokyo, 105-8001 (JP)**
• **Kakiuchi, Mikio
Tokyo, 105-8001 (JP)**
• **Ueda, Takashi
Tokyo, 105-8001 (JP)**

(74) Representative: **HOFFMANN EITLE
Patent- und Rechtsanwälte
Arabellastrasse 4
81925 München (DE)**

(54) **Armature winding of rotating electrical machine**

(57) According to one embodiment, there is provided a 3-phase 4-pole 2-layer armature winding (14) of a rotating electrical machine. A winding of each phase of the armature winding (14) forms a series coil. Each series coil includes upper coil pieces (15) and lower coil pieces (16) which are connected each other at a connection side coil end (19a) and a counter-connection side coil end (19b), the upper coil pieces (15) and lower coil pieces (16) being placed in 42 slots (13) provided in an armature core (12). At least one coil piece (22 or 23) of the upper and lower coil pieces (15, 16), provided in at least one of an innermost position and an outermost position from the center of a phase belt of each phase, is replaced with a coil piece (24 or 25) of an adjacent phase.

F I G. 6

EP 2 632 028 A2

**Description**

FIELD

Embodiments described herein relate generally to an armature winding of a rotating electrical machine.

BACKGROUND

In a large capacity rotating electrical machine, an armature winding includes upper and lower coil pieces formed in two layers in slots provided in an armature core configured by a laminated core, and the coil pieces are connected in series to increase a generated voltage and machine capacity. However, as a voltage of an armature winding increases, main insulation thickness becomes thick, a cross-sectional area of a conductor decreases, and a current density increases, causing an increased loss. If a voltage of an armature winding is extremely increased, the reliability of main insulation is decreased.

The number of slots is important for setting a voltage of an armature winding. In a 4-pole 3-phase machine, the number of slots is reduced to half of a 2-pole machine by using so-called integer slots, in which the number of slots can be divided by the number of poles and phases, and design flexibility is limited. To avoid such a defect, it is necessary to design a machine with fractional slots, for example, a 4-pole 54-slot machine, in which the number of slots cannot be divided by the number of poles and phases.

A magnetic flux per pole to generate the same voltage is half of a 4-pole machine compared with a 2-pole machine, and the thickness of an armature core yoke can be reduced by just that much.

In a rotating electrical machine, a magnetic flux generated in a gap between an armature and a rotor generates an electromagnetic force to attract an armature core to a rotor, and the electromagnetic force generates circular vibration when a rotor rotates. As the electromagnetic force has power proportional to a square of a magnetic flux density B, an electromagnetic force at a lowest frequency is generated by a magnetic flux element corresponding to an electrical frequency, and becomes an excitation force having a frequency double the electrical frequency. Generally, a space harmonic component of a magnetic flux in a gap is considered to be a space harmonic component of a magnetic flux $B_f$ generated by a field current, and a space harmonic component of a magnetic flux $B_a$ generated by an armature current. In the above space harmonic components, only a harmonic component of the magnetic flux $B_a$ generated by an armature current corresponds to an electrical frequency. Therefore, a magnetic flux component B corresponding to an electrical frequency is expressed as follows, assuming $\theta$ to be a machine angle, because a space harmonic component Ba3, Ba6, ... of a multiple of 3 is usually canceled in a 3-phase 4-pole machine.

$$B = B_1 \cos(2\theta - \omega t)$$
$$+ B_{a2} \cos(4\theta + \omega t) + B_{a4} \cos(8\theta - \omega t)$$
$$+ B_{a5} \cos(10\theta + \omega t) + B_{a7} \cos(14\theta - \omega t) + \cdots$$

Generally, a winding coefficient for an even-ordered space harmonic is zero in an integer-slot machine as shown in Table 1, and an even-ordered space harmonic component of a magnetic flux is also zero.

Table 1 Example of winding coefficient of 4-pole machine

| Kind | Slot No. | coil pitch | Space harmonic order | | | | |
|------|----------|-----------|------|------|------|------|------|
| | | | 1 | 2 | 4 | 5 | 7 |
| Fractional slot | 42 | 9 | 0.9216 | 0.1103 | 0.1911 | 0.0735 | |
| Integer slot | 48 | 10 | 0.9250 | 0.0000 | 0.0000 | 0.0531 | |
| Integer slot | 60 | 12 | 0.9099 | 0.0000 | 0.0000 | 0.0000 | 0.0878 |
| Fractional slot | 66 | 13 | 0.9028 | 0.0282 | 0.0450 | 0.0183 | 0.0959 |
| Fractional slot | 66 | 14 | 0.9284 | 0.0209 | 0.0377 | 0.0717 | 0.0132 |

Therefore, an AC component $B^2_{ac}$ of a square of a magnetic flux density corresponding to an electrical frequency is expressed as follows.

$$B^2{}_{ac} = \frac{1}{2}B_1{}^2 \cos(4\theta - 2\omega t) + B_1 B_{a5} \cos(8\theta + 2\omega t)$$

$$+ B_1 B_{a7} \cos(16\theta - \omega t) + \cdots$$

An electromagnetic excitation force $F_a$ acting on an armature core is expressed as follows, because the electromagnetic excitation force $F_a$ is proportional to the AC component $B^2{}_{ac}$.

$F_a = F_{a4} \cos(40-2\omega t) + F_{a8} \cos(8\theta+\omega t) + F_{a16} \cos(16\theta-2\omega t) + \cdots$ Here, an electromagnetic excitation force of a lowest space harmonic order is an 8-pole component (4-diameter node mode), and a 4-diameter node mode is apt to be excited for vibration of a core.

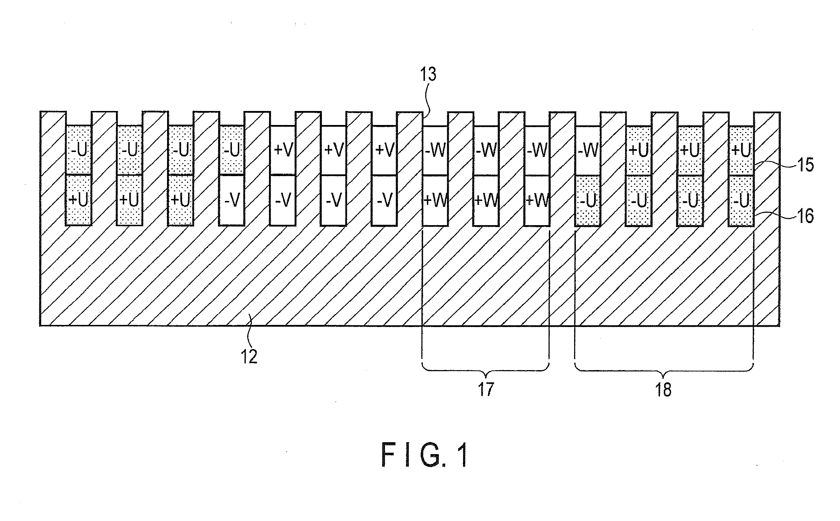

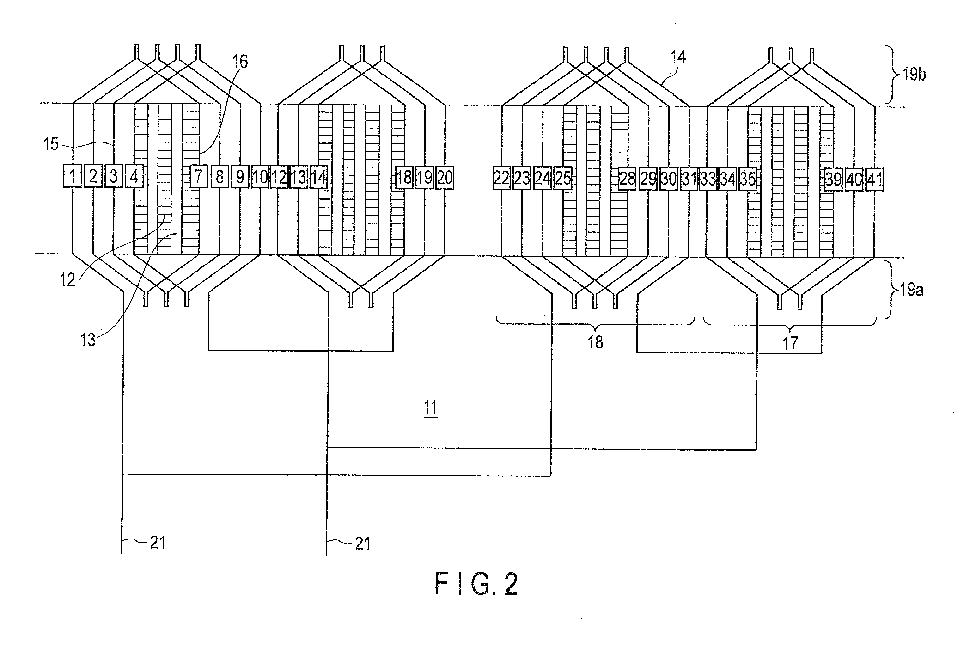

On the other hand, in a fractional-slot machine, for example a 4-pole 42-slot machine, the number of slots 42 cannot be divided by the number of poles, and a winding of each phase is wound such that a phase belt 17 including three coils and a phase belt 18 including four coils are alternately arranged in a circumferential direction, as shown in FIG. 1. Therefore, in a single-phase armature winding 14, a phase belt 17 including three coils and a phase belt 18 including four coils alternately appear corresponding to each magnetic pole position, as shown in FIG. 2 (The numbers in the square frame shows an example of a slot number.). Thus, symmetry is not established for each magnetic pole, and a winding coefficient for an even-ordered space harmonic is not zero, as shown in Table 1.

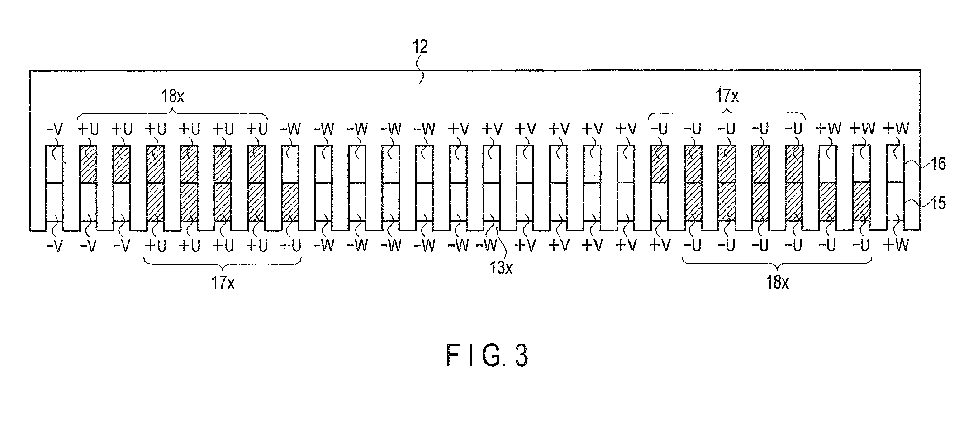

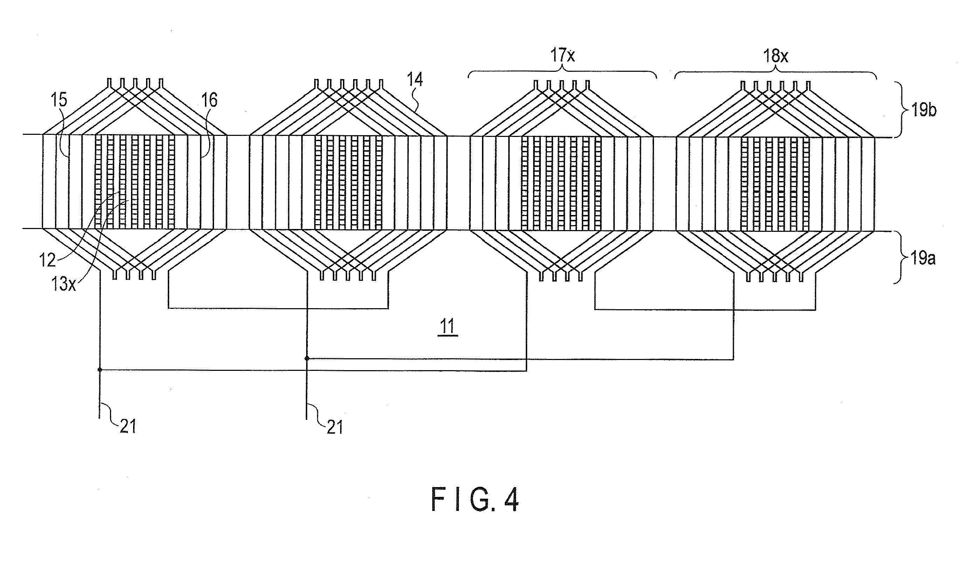

Also, for example, in a fractional-slot machine having 66-slots 4-pole, the number of slots 66 cannot be divided by the number of poles, upper and lower coil pieces 15 and 16 to be an armature winding are placed in slots 13x provided in an armature core 12, and a winding of each phase is wound such that a phase belt 17x including three coils and a phase belt 18x including four coils are alternately arranged in a circumferential direction, as shown in FIG. 3. More specifically, in FIG. 4, one ends of the upper and lower coil pieces 15 and 16 are connected in series at a connection side coil end 19a connected to a lead wire of a winding, and other ends of the upper and lower coil pieces 15 and 16 are connected in series at a counter-connection side coil end 19b unconnected to a lead wire of a winding. In an armature winding 14, a phase belt 17 including four series coils and a phase belt 18 including five series coils are connected in series, and two sets of circuit including series-connected 4-coil and 5-coil phase belts 17 and 18 is connected in parallel through a lead-out conductor 21 provided at the connection side coil end 19a. Therefore, in a single-phase armature winding 14, a phase belt 17x including five coils and a phase belt 18 including six coils alternately appear corresponding to each magnetic pole position. Thus, symmetry is not established for each magnetic pole, and a winding coefficient for an even-ordered space harmonic is not zero, as shown in Table 1.

Therefore, an AC component $B^2{}_{ac}$ of a square of a magnetic flux density B corresponding to an electrical frequency is expressed as follows.

$$B^2{}_{ac} = \frac{1}{2}B_1{}^2 \cos(4\theta - 2\omega t) + B_1 B_{a5} \cos(8\theta + 2\omega t)$$

$$+ B_1 B_{a7} \cos(16\theta - \omega t) + \cdots$$

An electromagnetic excitation force Fa acting on an armature core is expressed as follows, because the electromagnetic excitation force Fa is proportional to the AC component $B^2{}_{ac}$.

$$F_a = F_{a2} \cos(2\theta + 2\omega t) + F_{a4} \cos(4\theta - 2\omega t) + F_{a8} \cos(8\theta + \omega t)$$

$$+ F_{a10} \cos(10\theta - 2\omega t) + \cdots$$

Here, a 4-pole component (2-diameter node mode) appears as a lowest order electromagnetic excitation force.

As a cause of an electromagnetic excitation force of a 4-pole component (2-diameter node mode), for example, the interaction between a fourth-order harmonic component $B_{a4}$ and a fifth-order harmonic component $B_{a5}$ is considerable in addition to the above-mentioned interaction between a basic wave magnetic flux density $B_1$ and a second-order harmonic component $B_{a2}$. However, as the ratio of a basic wave $B_1$ to a magnetic flux density is generally high, a value of second-order harmonic component $B_{a2}$ is considered to determine a value of electromagnetic excitation force of a 4-pole component (2-diameter node mode).

In circular vibration, as a mode number of diameter node mode decreases, a natural vibration frequency decreases. Therefore, it is general to detune a natural vibration frequency for a lowest order excitation frequency in an armature core. However, as described above, an armature core yoke is made thin in a 4-pole machine, and the rigidity of an armature core for circular vibration is lower than a 2-pole machine, and it is sometimes difficult to sufficiently detune a natural vibration frequency for circular vibration in 2-diameter node mode. In such a case, excessive core vibration may be induced by an electromagnetic excitation force of a 4-pole component (2-diameter node mode) generated in a fractional-slot machine.

Under the circumstances, it is desired to provide an armature winding of a rotating electrical machine, in which an electromagnetic excitation force of a 4-pole component induced by a magnetic flux generated by an armature current is decreased, vibration of an armature core is decreased, and the reliability is increased.

BRIEF DESCRIPTION OF THE DRAWINGS

FIG. 1 is a developed schematic diagram showing a portion of a cross section of an armature of a conventional rotating electrical machine;

FIG. 2 is a developed schematic diagram showing one phase of an armature winding of a conventional rotating electrical machine;

FIG. 3 is a developed schematic diagram showing a portion of a cross section of an armature of a conventional rotating electrical machine;

FIG. 4 is a developed schematic diagram showing one phase of an armature winding of a conventional rotating electrical machine;

FIG. 5 is a schematic diagram showing a cross section of an armature of a rotating electrical machine according to a first embodiment;

FIG. 6 is a developed schematic diagram showing one phase of an armature winding of a conventional rotating electrical machine according to the same embodiment;

FIG. 7 is a developed schematic diagram showing a portion of a cross section of an armature of a rotating electrical machine according to the same embodiment;

FIG. 8 is a developed schematic diagram showing one phase of an armature winding of a conventional rotating electrical machine according to a second embodiment;

FIG. 9 is a developed schematic diagram showing a portion of a cross section of an armature of a rotating electrical machine according to the same embodiment;

FIG. 10 is a developed schematic diagram showing one phase of an armature winding of a conventional rotating electrical machine according to a third embodiment;

FIG. 11 is a developed schematic diagram showing a portion of a cross section of an armature of a rotating electrical machine according to the same embodiment;

FIG. 12 is a schematic diagram showing a cross section of an armature of a rotating electrical machine according to a fourth embodiment;

FIG. 13 is a developed schematic diagram showing one phase of an armature winding of a conventional rotating electrical machine according to the same embodiment;

FIG. 14 is a developed schematic diagram showing a portion of a cross section of an armature of a rotating electrical machine according to the same embodiment;

FIG. 15 is a developed schematic diagram showing one phase of an armature winding of a conventional rotating electrical machine according to a fifth embodiment;

FIG. 16 is a developed schematic diagram showing a portion of a cross section of an armature of a rotating electrical machine according to the same embodiment;

FIG. 17 is a developed schematic diagram showing one phase of an armature winding of a conventional rotating electrical machine according to a sixth embodiment;

FIG. 18 is a developed schematic diagram showing a portion of a cross section of an armature of a rotating electrical machine according to the same embodiment;

FIG. 19 is a developed schematic diagram showing one phase of an armature winding of a conventional rotating electrical machine according to a seventh embodiment; and

FIG. 20 is a developed schematic diagram showing a portion of a cross section of an armature of a rotating electrical machine according to the same embodiment.

DETAILED DESCRIPTION

Embodiments will be described below with reference to the drawings. In general, according to one embodiment, there is provided a 3-phase 4-pole 2-layer armature winding of a rotating electrical machine. A winding of each phase of the armature winding forms a series coil. Each series coil includes upper coil pieces and lower coil pieces which are connected each other at a connection side coil end and a counter-connection side coil end, the upper coil pieces and lower coil pieces being placed in 42 or 66 slots provided in an armature core. At least one coil piece of the upper and lower coil pieces, provided in at least one of an innermost position and an outermost position from the center of a phase belt of each phase, is replaced with a coil piece of an adjacent phase.

<First embodiment>

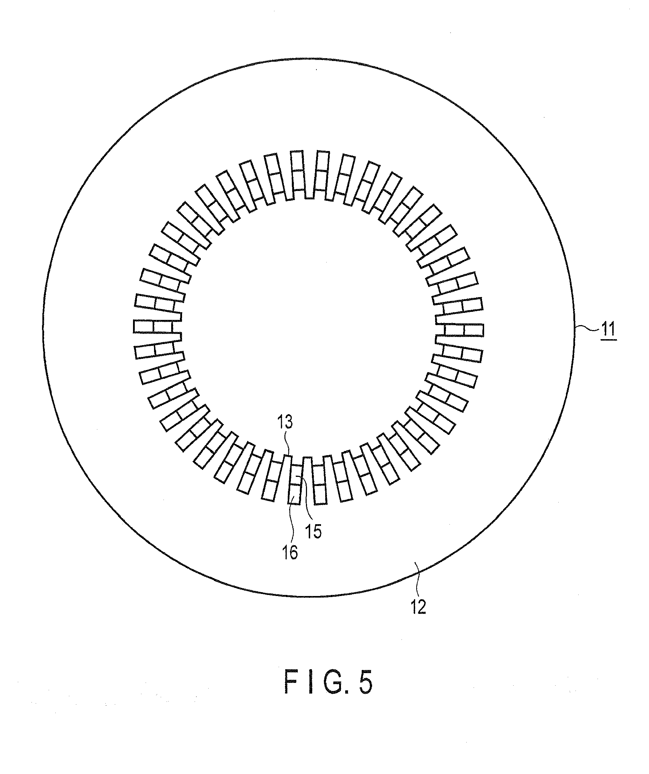

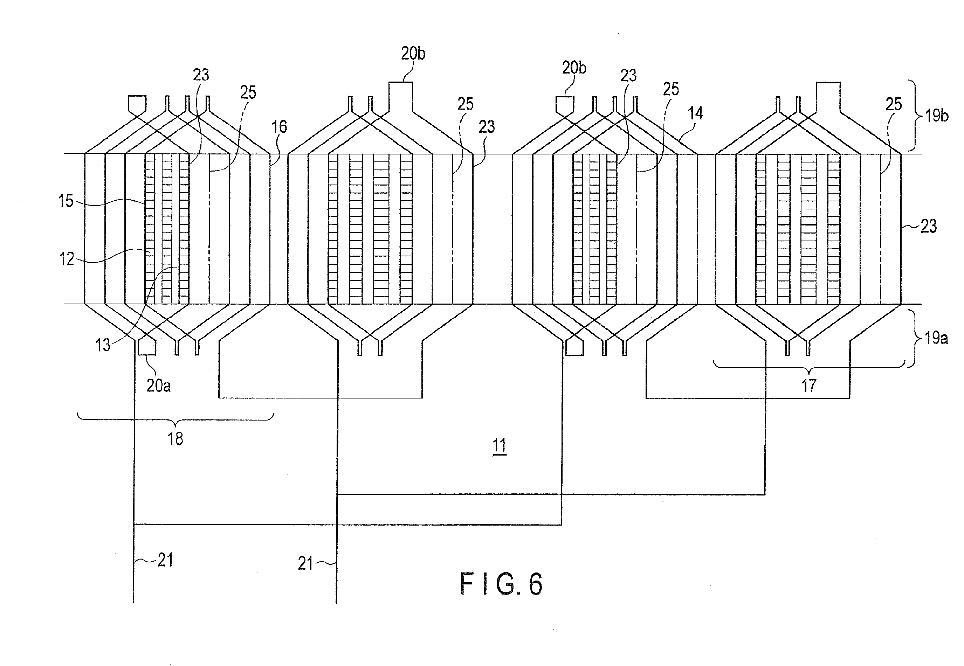

FIG. 5 is a schematic diagram showing a cross section of an armature of a rotating electrical machine according to a first embodiment. FIG. 6 is a developed schematic diagram showing one phase of an armature winding of a rotating electrical machine according to the same embodiment.

An armature 11 of a rotating electrical machine is provided with 42 slots 13 in an armature core 12 configured by a laminated core, and an armature winding 14 of a 4-pole 3-phase circuit is formed in two layers in slots 13. It is to be noted that in FIGS. 5 and 6, the numbers in the square frame, which shows an example of a slot number, as are each of the other FIGS.

An armature winding 14 of each phase includes upper coil pieces 15 placed in an upper part of slots 13, and lower coil pieces 16 placed in a lower part of slots 13. The ends of the upper and lower coil pieces 15 and 16 are connected in series at a connection side coil end 19a connected to a lead wire of a winding, and a counter-connection side coil end 19b opposite along a shaft and unconnected to a lead wire of a winding. Further, an armature winding 14 includes a phase belt 17 including three coils, in which upper and lower coil pieces 15 and 16 are placed in three slots 13 provided in the armature core 12, and a phase belt 18 including four coils, in which upper and lower coil pieces 15 and 16 are placed in four slots 13 provided in the armature core 12.

Upper coil pieces 15 of each of the phase belts 17 and 18 are connected to corresponding lower coil pieces 16 separated by a predetermined coil pitch, at the connection side and counter-4 side coil ends 19a and 19b, thereby forming a series coil. A phase belt 17 including three series coils and a phase belt 18 including four series coils are connected in series. Two sets of circuit including series-connected 4-coil and 5-coil phase belts 17 and 18 is connected in parallel through a lead-out conductor 21 provided at the connection side coil end 19a, thereby forming an armature winding 14. FIG. 6 shows an example using a small coil pitch 6 for convenience of viewing. A coil pitch is not to be limited to this value. This is the same in other diagrams.

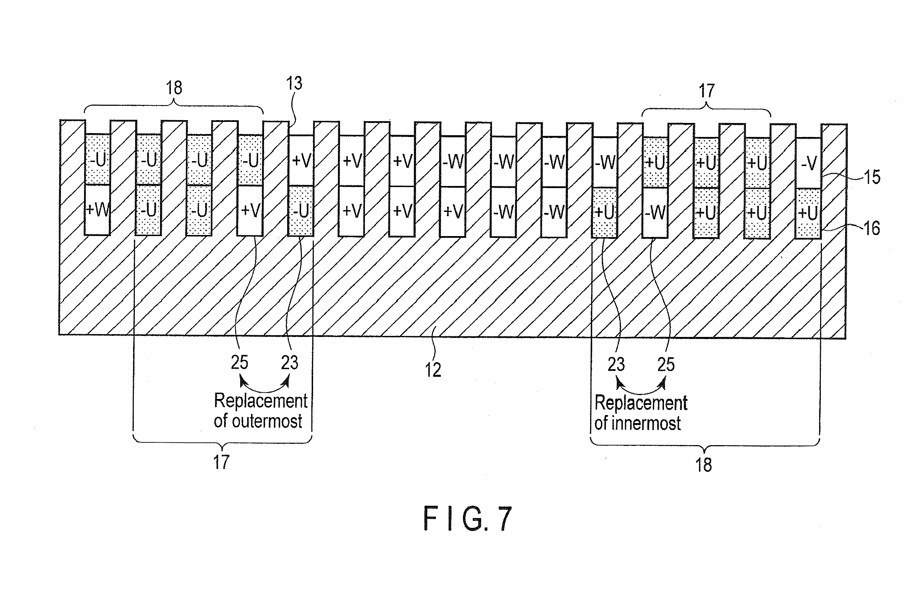

In FIGS. 6 and 7, two jumper wires 20a are provided per phase at a connection side coil end 19a of each of the phase belts 17 and 18, and four jumper wires 20b are provided per phase at a counter-connection side coil end 19b, and a coil position is indicated by a position from the center of phase in each phase belt. In a 3-coil phase belt 17, a lower coil piece 23 in an outermost position from the center of the phase belt is replaced with a lower coil piece 25 of a 4-coil phase belt of an adjacent different phase. In a 4-coil phase belt 18, a lower coil piece 23 in an innermost position from the center of the phase belt is replaced with a lower coil piece 25 of a 3-coil phase belt of an adjacent different phase.

The terms "outermost" and "innermost" are intended to mean being "geometrically outermost" and "geometrically innermost." More specifically, the center of the phase belt corresponds to the slot located at the geometric center. The "outermost" corresponds to the slot farthest from the center of the phase belt, and the "innermost" corresponds to the slot closest to the center of the phase belt. The coil pitch corresponds to the number of partitioning walls between the slot of the upper coil piece 15 and the slot of the lower coil piece 16 connected to the upper coil piece 15 through the coil end 19a or 19b. Where the positions of the coil pieces 15 and 16 are indicated by slot numbers, the coil pitch can be regarded as a value representing the difference between the slot number of the upper coil piece 15 and the slot number of the lower coil piece 16.

Generally, in an armature winding, a coil pitch is determined to reduce a fifth-order space winding coefficient to prevent deterioration of an induced voltage waveform and rotor surface loss. In a conventional example of a 4-pole 42-slot armature winding, only a winding with a coil pitch 9 shown in Table 1 can be selected to reduce fifth-order space winding coefficient to less than 10%.

Table 2 shows the relationship between a coil pitch and a winding coefficient of each order space in the first embodiment.

Table 2 Relationship between coil pitch and winding coefficient in first embodiment

| Coil pitch | 10 | 11 |
| --- | --- | --- |
| Basic wave winding coefficient | 0.9274 | 0.9271 |
| Second-order space winding coefficient | 0.0716 | 0.0631 |
| Fifth-order space winding coefficient | 0.0442 | 0.0991 |

Comparing Table 2 with Table 1, fifth-order space winding coefficient is reduced to less than 10% when a coil pitch is 10 or 11 in the first embodiment, and a second-order space winding coefficient is lower than a value in a conventional example shown in Table 1 in any case. Therefore, a second-order space harmonic component of a magnetic flux formed by an armature current can be reduced.

As described above, in the first embodiment, in a 3-coil phase belt 17, a lower coil piece 23 in an outermost position from the center of the phase belt is replaced with a lower coil piece 25 of a 4-coil phase belt of an adjacent different phase. In a 4-coil phase belt 18, and a lower coil piece 23 in an innermost position from the center of the phase belt is replaced with a lower coil piece 25 of a 3-coil phase belt of an adjacent different phase. With the above configuration, in the armature winding of the rotating electric machine having 42 slots 4-pole 3-phase, an electromagnetic excitation force of a 4-pole component (2-diameter node mode) induced by a magnetic flux generated by an armature current is decreased, vibration of an armature core is decreased, and the reliability is increased.

More specifically, with the above configuration, a winding coefficient for a second-order space harmonic can be minimized by setting a coil pitch to 11. Thereby, a second-order space harmonic component of a magnetic flux generated by an armature current is reduced. A magnetic flux of a second-order space harmonic component acts on a main magnetic flux, and generates a 2-diameter node magnetic excitation force. By reducing a magnetic flux of a second-order space harmonic component, an electromagnetic excitation force of a 2-diameter node is decreased, vibration of a 2-diameter node stator core is reduced.

The embodiment is not limited to the configuration shown in the diagrams. The same function and effect can be obtained even when upper coil pieces 15 are replaced with lower coil pieces 16 in FIG. 6, and vice versa, a lower coil piece 23 replaced with a different phase is assumed to be an upper coil piece 22 replaced with a different phase, and a lower coil piece 25 of a different phase is replaced with an upper coil piece of a different phase. The function and effect are the same even when a lead-out position is changed from the diagrams. Further, in FIG. 6, two parallel windings are formed by connecting two sets of circuit including 3-coil and 4-coil phase belts 17 and 18 in parallel. The same function and effect can be obtained even when an armature winding is formed by connecting two sets of circuit in series.

<Second embodiment>

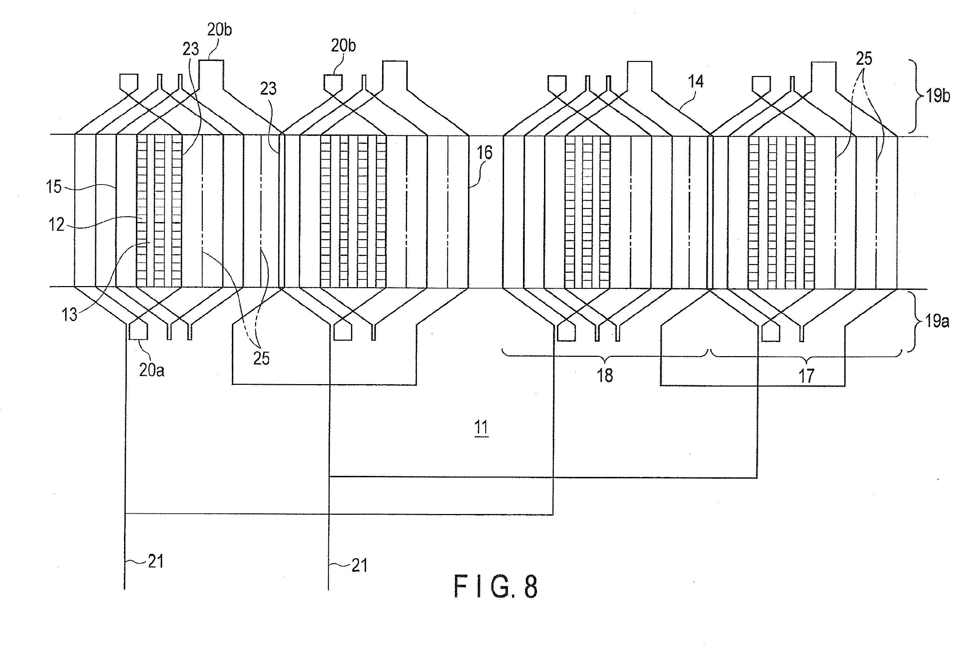

FIG. 8 is a developed schematic diagram showing one phase of an armature winding of a rotating electrical machine according to a second embodiment.

In the second embodiment, compared with the first embodiment, the positions to replace the coil pieces 23 and 25 are changed.

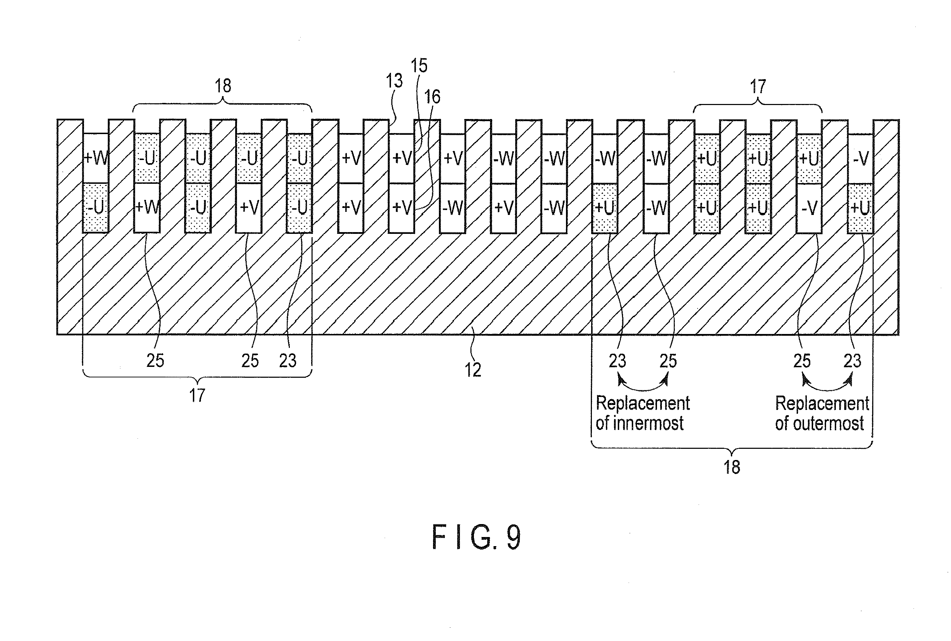

Specifically, four jumper wires 20a are provided per phase at a connection side coil end 19a of each of the phase belts 17 and 18, and eight jumper wires 20b are provided per phase at a counter-connection side coil end 19b. In FIGS. 8 and 9, in a 3-coil phase belt 17, a lower coil piece 23 in an innermost position and a lower coil piece 23 in an outermost position from the center of the phase are replaced with lower coil pieces 25 of a 4-coil phase belt of an adjacent different phase, respectively. In a 4-coil phase belt 18, a lower coil piece 23 in an innermost position and a lower coil piece 23 in an outermost position from the center of the phase belt are replaced with lower coil pieces 25 of a 3-coil phase belt of an adjacent different phase, respectively. The configuration except the positions to replace the coil pieces 23 and 25 are the same as those of the first embodiment. FIG. 8 shows an example using a small coil pitch 6 for convenience of viewing. A coil pitch is not to be limited to this value.

Table 3 shows the relationship between a coil pitch and a winding coefficient of each order space in the second embodiment.

Table 3 Relationship between coil pitch and winding coefficient in second embodiment

| Coil pitch | 10 | 11 |
|---|---|---|
| Basic wave winding coefficient | 0.9008 | 0.9008 |
| Second-order space winding coefficient | 0.0537 | 0.0537 |
| Fifth-order space winding coefficient | 0.0585 | 0.0585 |

Comparing Table 3 with Table 1, fifth-order and seventh-order space winding coefficients are reduced to less than 10% when a coil pitch is 10 or 11 in a second embodiment, and a second-order space winding coefficient is lower than a value in a conventional example shown in Table 1. Therefore, in the second embodiment, a second-order space harmonic component of a magnetic flux formed by an armature current can be reduced.

As described above, in the second embodiment, in a 3-coil phase belt 17, a lower coil piece 23 in an innermost position and a lower coil piece 23 in an outermost position from the center of the phase are replaced with lower coil pieces 25 of a 4-coil phase belt of an adjacent different phase, respectively. In a 4-coil phase belt 18, a lower coil piece 23 in an innermost position and a lower coil piece 23 in an outermost position from the center of the phase belt are replaced with lower coil pieces 25 of a 3-coil phase belt of an adjacent different phase, respectively. With the above configuration, a magnetic flux of a second-order space harmonic component is reduced by decreasing a winding coefficient for the second-order space harmonic component as in the first embodiment. Therefore, in the armature winding of the rotating electric machine having 42 slots 4-pole 3-phase, an electromagnetic excitation force of a 4-pole component (2-diameter node mode) induced by a magnetic flux generated by an armature current is decreased, vibration of an armature core is decreased, and the reliability is increased. Specifically, a winding coefficient can be minimized by setting a coil pitch to 10.

In the second embodiment, compared with the first embodiment, the numbers of jumper wires 20a and 20b at the connection side and counter-connection side coil ends are increased, but a second-order space harmonic component is effectively reduced, and the effect is high over a wide range of coil pitches.

The embodiment is not limited to the configuration shown in the diagrams. The same function and effect can be obtained even when upper coil pieces 15 are replaced with lower coil pieces 16 in FIG. 8, and vice versa, a lower coil piece 23 replaced with a different phase is assumed to be an upper coil piece 22 replaced with a different phase, and a lower coil piece 25 of a different phase is replaced with an upper coil piece 24 of a different phase. The function and effect are the same even when a lead-out position is changed from the diagrams. Further, in FIG. 8, two parallel windings are formed by connecting two sets of circuit including 3-coil and 4-coil phase belts 17 and 18 in parallel. The same function and effect can be obtained even when an armature winding is formed by connecting two sets of circuit in series.

<Third embodiment>

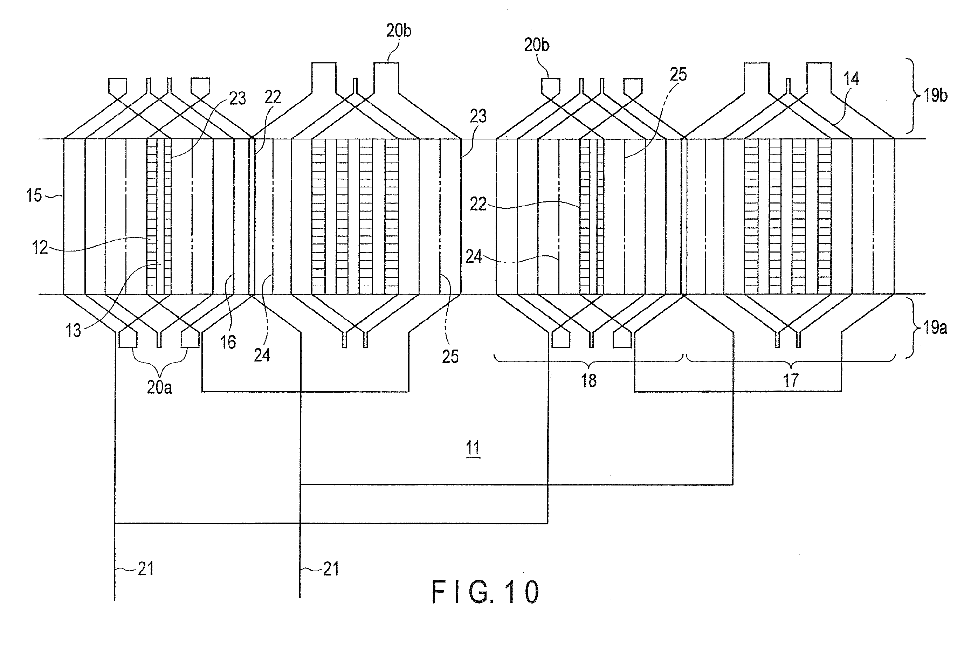

FIG. 10 is a developed schematic diagram showing one phase of an armature winding of a rotating electrical machine according to a third embodiment.

In the third embodiment, compared with the first embodiment, the positions to replace the coil pieces 22 to 25 are changed.

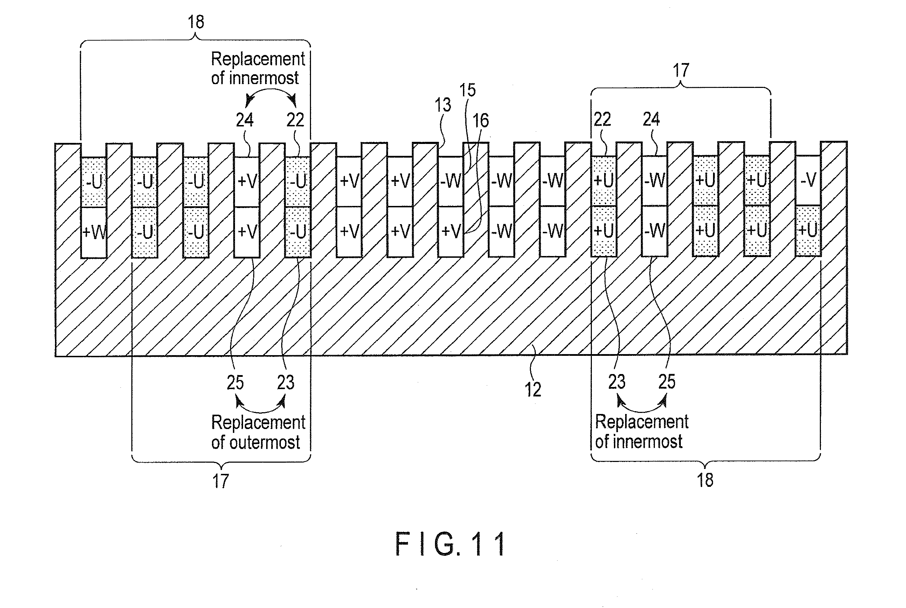

Specifically, four jumper wires 20a are provided per phase at a connection side coil end 19a of each of the phase belts 17 and 18, and eight jumper wires 20b are provided per phase at a counter-connection side coil end 19b. In FIGS. 10 and 11, in a 3-coil phase belt 17, an upper coil piece 22 in an outermost position from the center of a phase is replaced with an upper coil piece 24 of a 4-coil phase belt of an adjacent different phase, and a lower coil piece 23 in an outermost position from the center of the phase belt is replaced with a lower coil piece 25 of a 4-coil phase belt of an adjacent different phase. In a 4-coil phase belt 18, an upper coil piece 22 in an innermost position from the center of the phase belt is replaced with an upper coil piece 24 of a 3-coil phase belt of an adjacent different phase, and a lower coil piece 23 in an innermost position from the center of the phase belt is replaced with a lower coil piece 25 of a 3-coil phase belt of an adjacent different phase. The configuration except the positions to replace the coil pieces 22 to 25 are the same as those of the first embodiment. FIG. 10 shows an example using a small coil pitch 6 for convenience of viewing. A coil pitch is not to be limited to this value.

Table 4 shows the relationship between a coil pitch and a winding coefficient of each order space in the third embodiment.

Table 4 Relationship between coil pitch and winding coefficient in third embodiment

| Coil pitch | 10 | 11 |
|---|---|---|
| Basic wave winding coefficient | 0.9010 | 0.9006 |
| Second-order space winding coefficient | 0.0904 | 0.0791 |
| Fifth-order space winding coefficient | 0.0772 | 0.0846 |

Comparing Table 4 with Table 1, fifth-order and seventh-order space winding coefficients are reduced to less than 10% when a coil pitch is 10 or 11 in the third embodiment, and a second-order space winding coefficient is lower than a value shown in a conventional example in Table 1. Therefore, a second-order space harmonic component in a magnetic flux formed by an armature current can be reduced.

As described above, in the third embodiment, in a 3-coil phase belt 17, an upper coil piece 22 in an outermost position and a lower coil piece 23 in an outermost position from the center of the phase belt are replaced with an upper coil piece 24 and a lower coil piece 25 of a 4-coil phase belt of an adjacent different phase, respectively. In a 4-coil phase belt 18, an upper coil piece 22 in an innermost position and a lower coil piece 23 in an innermost position from the center of the phase belt are replaced with an upper coil piece 24 and a lower coil piece 25 of a 3-coil phase belt of an adjacent different phase, respectively. With the above configuration, a second-order space harmonic component of a magnetic flux is reduced by decreasing a winding coefficient as in the first embodiment. Therefore, in the armature winding of the rotating electric machine having 42 slots 4-pole 3-phase, an electromagnetic excitation force of a 4-pole component (2-diameter node mode) induced by a magnetic flux generated by an armature current is decreased, vibration of an armature core is decreased, and the reliability is increased. Specially, the winding coefficient can be minimized by setting a coil pitch to 11.

The embodiment is not limited to the configuration shown in the diagrams. The function and effect are the same even when a lead-out position is changed from that shown in the diagrams. Further, in FIG. 10, two parallel windings are formed by connecting two sets of circuit including 3-coil and 4-coil phase belts 17 and 18 in parallel. The same function and effect can be obtained even when an armature winding is formed by connecting two sets of circuit in series.

<Fourth embodiment>

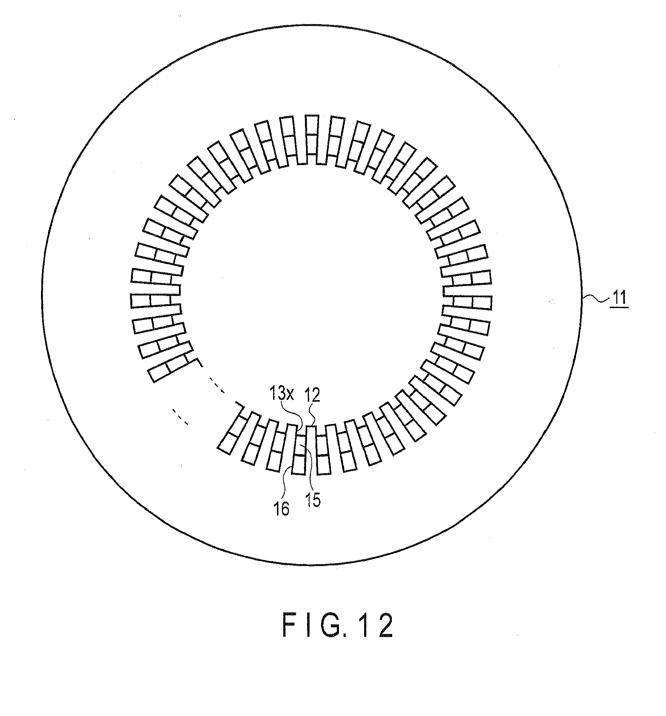

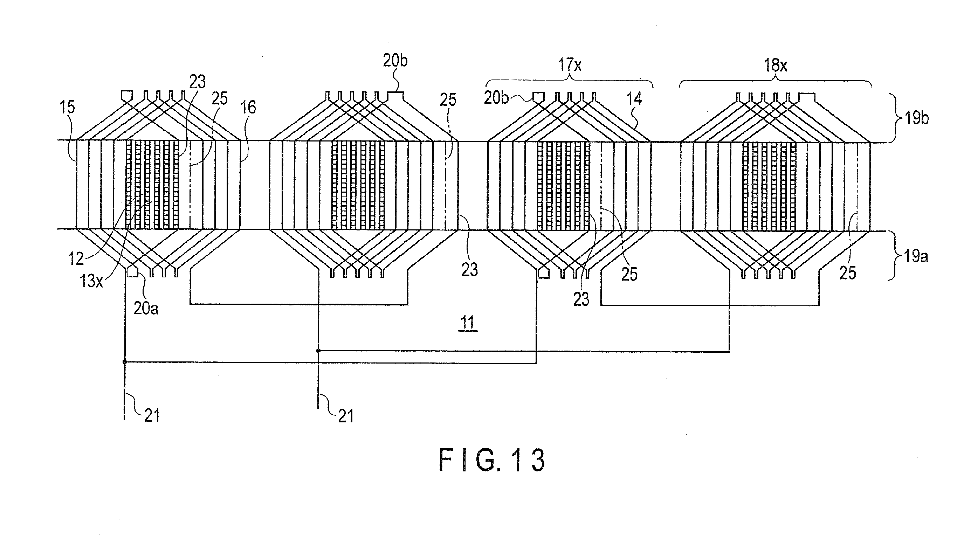

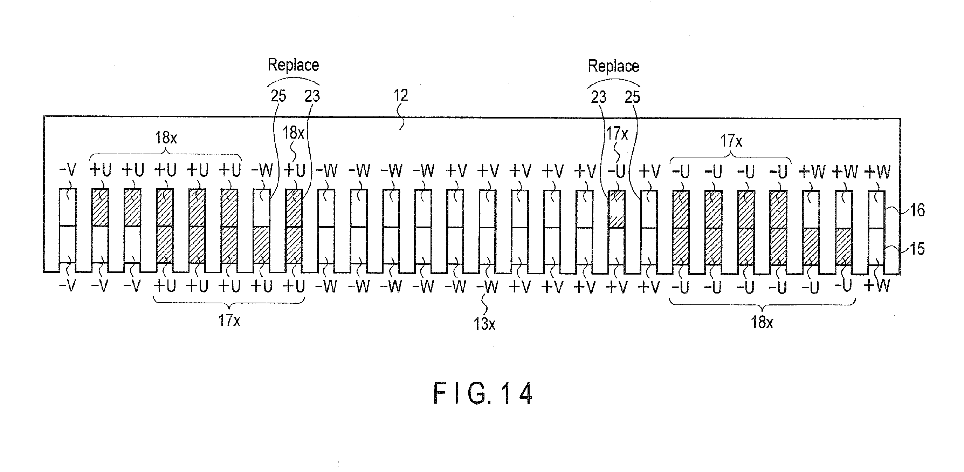

FIG. 12 is a schematic diagram showing a cross section of an armature winding of a rotating electrical machine according to a fourth embodiment. FIG. 13 is a developed schematic diagram showing one phase of an armature winding of a rotating electrical machine according to the same embodiment. FIG. 14 is a developed schematic diagram showing a portion of a cross section of an armature of a rotating electrical machine according to the same embodiment.

An armature 11 of a rotating electrical machine is provided with 66 slots 13x in an armature core 12 configured by a laminated core, and an armature winding 14 of a 4-pole 3-phase circuit is formed in two layers in slots 13x.

An armature winding 14 of each phase includes upper coil pieces 15 placed in an upper part of slots 13, and lower coil pieces 16 placed in a lower part of slots 13x. One ends of the upper and lower coil pieces 15 and 16 are connected in series at a connection side coil end 19a connected to a lead wire of a winding. Other ends of the upper and lower coil pieces 15 and 16 are connected in series at a counter-connection side coil end 19b unconnected to a lead wire of a winding. The armature winding 14 includes a phase belt 17x including five coils, in which upper and lower coil pieces 15 and 16 are placed in five slots 13x provided in the armature core 12, and a phase belt 18x including six coils, in which upper and lower coil pieces 15 and 16 are placed in six slots 13x provided in the armature core 12.

Upper coil pieces 15 of each of the phase belts 17x and 18x are connected to corresponding lower coil pieces 16 separated by a predetermined coil pitch, at the connection side and counter-connection side coil ends 19a and 19b, thereby forming a series coil. A phase belt 17x including five series coils and a phase belt 18x including six series coils are connected in series. Two sets of circuit including series-connected 5-coil and 6-coil phase belts 17x and 18x is connected in parallel through a lead-out conductor 21 provided at the connection side coil end 19a, thereby forming an armature winding 14. FIG. 13 shows an example using a small coil pitch 9 for convenience of viewing. A coil pitch is not to be limited to this value. This is the same in diagrams of the following respective embodiments.

In FIGS. 13 and 14, two jumper wires 20a are provided per phase at a connection side coil end 19a of each of the phase belts 17x and 18x, and four jumper wires 20b are provided per phase at a counter-connection side coil end 19b, and a coil position is indicated by a position from the center of phase in each phase belt. In a 5-coil phase belt 17x, a lower coil piece 23 in an innermost position from the center of the phase belt is replaced with a lower coil piece 25 of a 6-coil phase belt of an adjacent different phase. In a 6-coil phase belt 18x, a lower coil piece 23 in an outermost position from the center of the phase belt is replaced with a lower coil piece 25 of a 5-coil phase belt of an adjacent different phase.

The terms "outermost" and "innermost" are intended to mean being "geometrically outermost" and "geometrically innermost." More specifically, the center of the phase belt corresponds to the slot located at the geometric center. The "outermost" corresponds to the slot farthest from the center of the phase belt, and the "innermost" corresponds to the slot closest to the center of the phase belt. The coil pitch corresponds to the number of partitioning walls between the slot of the upper coil piece 15 and the slot of the lower coil piece 16 connected to the upper coil piece 15 through the coil end 19a or 19b. Where the positions of the coil pieces 15 and 16 are indicated by slot numbers, the center of the phase belt corresponds to a value obtained by averaging the slot numbers indicating the coil pieces 15 and 16 of the phase belt, and the coil pitch can be regarded as a value representing the difference between the slot number of the upper coil piece 15 and the slot number of the lower coil piece 16.

Generally, in an armature winding, a coil pitch is determined to reduce fifth-order and seventh-order space winding coefficients to prevent deterioration of an induced voltage waveform and rotor surface loss. In a conventional example of a 4-pole 66-slot armature winding, only a winding with a coil pitch 13 or 14 shown in Table 1 can be selected to reduce fifth-order and seventh-order space winding coefficients to less than 10%.

Table 5 shows the relationship between a coil pitch and a winding coefficient of each order space in a conventional example (4-pole 66-slot).

In Table 5, the values of coil pitches 13-14 are values of the conventional examples shown in Table 1. With respect to the coil pitches other than 13-14, the fifth-order or seventh-order space winding coefficient is not less than 10%. Although such coil pitches are not used in the conventional art, they are included in Table 5, for easy comparison with the data shown in Tables 6-9.

Table 5 Relationship between coil pitch and winding coefficient in a conventional example

| Coil pitch | 11 | 12 | 13 | 14 | 15 | 16 | 17 |
|---|---|---|---|---|---|---|---|
| Basic wave winding coefficient | 0.8273 | 0.8690 | 0.9028 | 0.9284 | 0.9456 | 0.9542 | 0.9542 |
| Second-order space winding coefficient | 0.0395 | 0.0345 | 0.0282 | 0.0209 | 0.0129 | 0.0043 | 0.0043 |
| Fifth-order space winding coefficient | 0.1670 | 0.1042 | 0.0183 | 0.0717 | 0.1457 | 0.1874 | 0.1874 |
| Seventh-order space winding coefficient | 0.1204 | 0.1376 | 0.0959 | 0.0132 | 0.0751 | 0.1313 | 0.1313 |

In practice, the conventional example has been used only in the coil pitches 13 to 14.

Table 6 shows the relationship between a coil pitch and a winding coefficient of each order space in the fourth embodiment.

Table 6 Relationship between coil pitch and winding coefficient in the fourth embodiment

| Coil pitch | 11 | 12 | 13 | 14 | 15 | 16 | 17 |
|---|---|---|---|---|---|---|---|
| Basic wave winding coefficient | 0.8196 | 0.8609 | 0.8945 | 0.9199 | 0.9370 | 0.9456 | 0.9456 |
| Second-order space winding coefficient | 0.0327 | 0.0250 | 0.0166 | 0.0081 | 0.0052 | 0.0129 | 0.0215 |
| Fifth-order space winding coefficient | 0.1398 | 0.0988 | 0.0478 | 0.0584 | 0.1103 | 0.1457 | 0.1515 |
| Seventh-order space winding coefficient | 0.0660 | 0.0913 | 0.0888 | 0.0607 | 0.0465 | 0.0751 | 0.0938 |

Comparing Table 6 with Table 5, fifth-order and seventh-order space winding coefficients are reduced to less than 10% when a coil pitch is 13 or 14 in the fourth embodiment, and a second-order space winding coefficient is lower than a value of coil pitch 13 and 14 in a conventional example shown in Table 5. Therefore, in the fourth embodiment, a second-order space harmonic component of a magnetic flux formed by an armature current can be reduced.

Table 6 omits other coil pitches than 11 to 17. Coil pitches other than 11 to 17 are usually not used, because a coil size becomes too large or small, or a sufficient effect is not obtained.

As described above, in the fourth embodiment, in a 5-coil phase belt 17x, a lower coil piece 23 in an innermost position from the center of the phase belt is replaced with a lower coil piece 25 of a 6-coil phase belt of an adjacent different phase. In a 6-coil phase belt 18x, and a lower coil piece 23 in an outermost position from the center of the phase belt is replaced with a lower coil piece 25 of a 5-coil phase belt of an adjacent different phase. With the above configuration, in the armature winding of the rotating electric machine having 66 slots 4-pole 3-phase, an electromagnetic excitation force of a 4-pole component (2-diameter node mode) induced by a magnetic flux generated by an armature current is decreased, vibration of an armature core is decreased, and the reliability is increased.

More specifically, with the above configuration, a winding coefficient for a second-order space harmonic can be minimized by setting a coil pitch to 14. A second-order space harmonic component of a magnetic flux generated by an armature current is reduced. A magnetic flux of a second-order space harmonic component acts on a main magnetic flux, and generates a 2-diameter node magnetic excitation force. By reducing a magnetic flux of a second-order space harmonic component, an electromagnetic excitation force of a 2-diameter node is decreased, vibration of a 2-diameter node stator core is reduced.

The present embodiment is advantageous in that the number of nonstandard connections using jumper wires 20a and 20b is as few as 6 per phase, and the second-order space harmonic component can be reduced to approximately 40% in comparison with the case of coil pitch 14 representing the conventional art.

The embodiment is not limited to the configuration shown in the diagrams. The same function and effect can be obtained even when upper coil pieces 15 in FIG. 13 are assumed to be lower coil pieces 16, and lower coil pieces 16 are assumed to be upper coil pieces 15, an lower coil piece 23 replaced with a different phase is assumed to be a upper coil piece 22 replaced with a different phase, an lower coil piece 25 of a different phase is assumed to be a upper coil piece 24 of a different phase. The function and effect are the same even when a lead-out position is changed from the diagrams. Further, in FIG. 13, two parallel windings are formed by connecting two sets of circuit including 5-coil and 6-coil phase belts 17x and 18x in parallel. The same function and effect can be obtained even when an armature winding is formed by connecting two sets of circuit in series.

<Fifth embodiment>

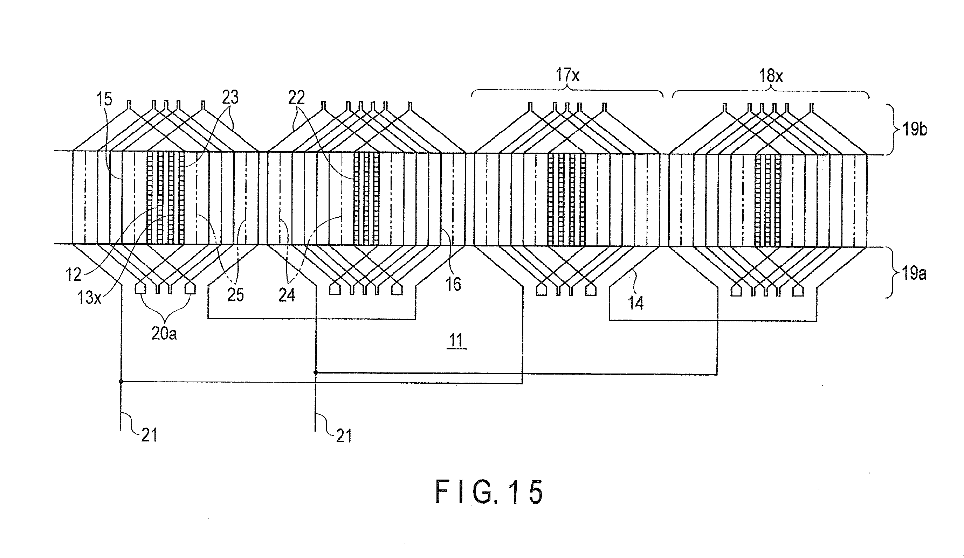

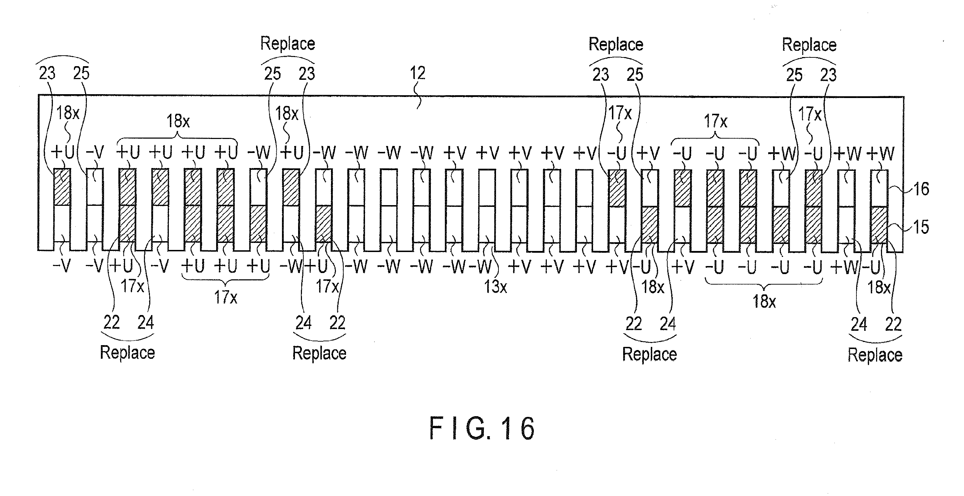

FIG. 15 is a developed schematic diagram showing one phase of an armature winding of a rotating electrical machine according to the fifth embodiment. FIG. 16 is a developed schematic diagram showing a portion of a cross section of an armature of a rotating electrical machine according to the same embodiment.

In the fifth embodiment, elements common to FIGS. 13 and 14 are given the same reference numbers, and a detailed explanation thereof is omitted. Parts different from the fourth embodiment are mainly explained. In each of the embodiments as well, a duplicate explanation is omitted here similarly.

In the fifth embodiment, compared with the fourth embodiment, the coil pieces 22 to 25 replaced with a different phase are changed.

Specifically, eight jumper wires 20a are provided per phase at a connection side coil end 19a of each of the phase belts 17x and 18x. In FIGS. 15 and 16, in a 5-coil phase belt 17x, an upper coil piece 22 in an innermost position and a lower coil piece 23 in an outermost position from the center of the phase are replaced with an upper coil piece 24 and a lower coil piece 25 of a 6-coil phase belt of an adjacent different phase, respectively. In a 6-coil phase belt 18x, an upper coil piece 22 in an innermost position and a lower coil piece 23 in an outermost position from the center of the phase belt are replaced with an upper piece 24 and a lower coil piece 25 of a 5-coil phase belt of an adjacent different phase, respectively. The above configuration is the same as those of the fourth embodiment except for the positions to replace the coil pieces 22 to 25.

Table 7 shows the relationship between a coil pitch and a winding coefficient of each order space in the fifth embodiment.

Table 7 Relationship between coil pitch and winding coefficient in the fifth embodiment

| Coil pitch | 11 | 12 | 13 | 14 | 15 | 16 | 17 |
|---|---|---|---|---|---|---|---|
| Basic wave winding coefficient | 0.7974 | 0.8376 | 0.8701 | 0.8948 | 0.9114 | 0.9197 | 0.9197 |
| Second-order space winding coefficient | 0.0339 | 0.0296 | 0.0242 | 0.0179 | 0.0110 | 0.0037 | 0.0037 |
| Fifth-order space winding coefficient | 0.0267 | 0.0167 | 0.0029 | 0.0215 | 0.0233 | 0.0300 | 0.0300 |
| Seventh-order space winding coefficient | 0.0636 | 0.0727 | 0.0507 | 0.0070 | 0.0397 | 0.0694 | 0.0694 |

Comparing Table 7 with Table 5, fifth-order and seventh-order space winding coefficients are reduced to less than 10% when a coil pitch is 14 to 17 in the fifth embodiment, and a second-order space winding coefficient is lower than a value of coil pitch 13 and 14 in a conventional example shown in Table 5. Therefore, in the fifth embodiment, second-order space harmonic component of a magnetic flux formed by an armature current can be reduced.

As described above, in the fifth embodiment, in a 5-coil phase belt 17x, an upper coil piece 22 in an innermost position and a lower coil piece 23 in an outermost position from the center of the phase belt are replaced with an upper coil piece 24 and a lower coil piece 25 of a 6-coil phase belt of an adjacent different phase, respectively. In a 6-coil phase belt 18x, an upper coil piece 22 in an innermost position and a lower coil piece 23 in an outermost position from the center of the phase belt are replaced with an upper coil piece 24 and a lower coil piece 25 of a 5-coil phase belt of an adjacent different phase, respectively. With the above configuration, a winding coefficient for a second-order space harmonic component can be reduced, and a magnetic flux of the second-order space harmonic component is reduced as in the fourth embodiment. Therefore, in the armature winding of the rotating electric machine having 66 slots 4-pole 3-phase, an electromagnetic excitation force of a 4-pole component (2-diameter node mode) induced by a magnetic flux generated by an armature current is decreased, vibration of an armature core is decreased, and the reliability is increased. Specifically, a winding coefficient can be minimized by setting a coil pitch to 16 or 17.

In the fifth embodiment, more jumper wires 20a may be required at the connection side coil end, as compared with the fourth embodiment. However, the fifth embodiment is advantageous in that the second-order space harmonic component can be reduced significantly, and the reduction of the second-order space harmonic component can be expected in a wide range where coil pitches are 14-17. For example, the number of nonstandard connections using jumper wires 20a may be increased to 8 per phase, but the second-order space harmonic component can be reduced to approximately 20% in comparison with the case of coil pitch 14 representing the conventional art.

The embodiment is not limited to the configuration shown in the diagrams. The function and effect are the same even when a lead-out position is changed from that shown in the diagrams. Further, in FIG. 15, two parallel windings are formed by connecting two sets of circuit including 5-coil and 6-coil phase belts 17x and 18x in parallel. The same function and effect can be obtained even when an armature winding is formed by connecting two sets of circuit in series.

<Sixth embodiment>

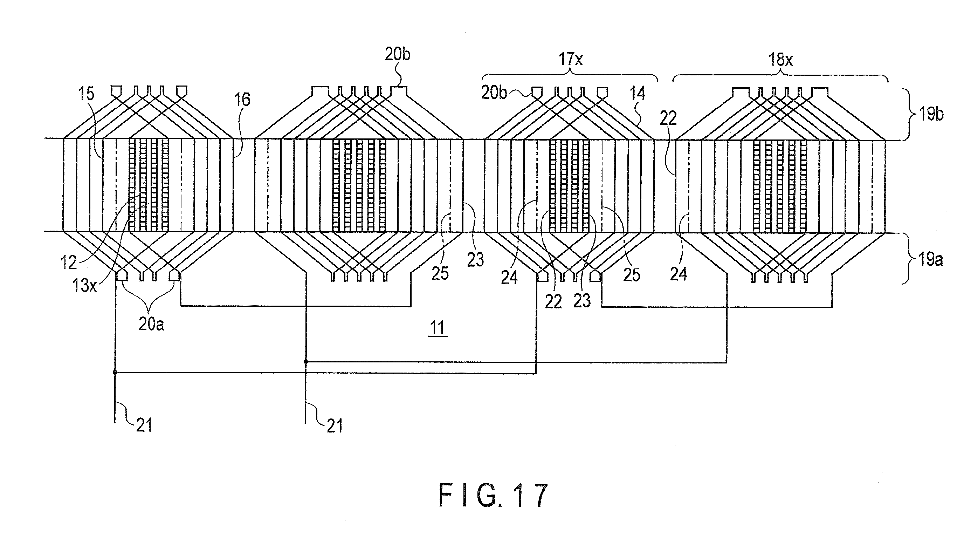

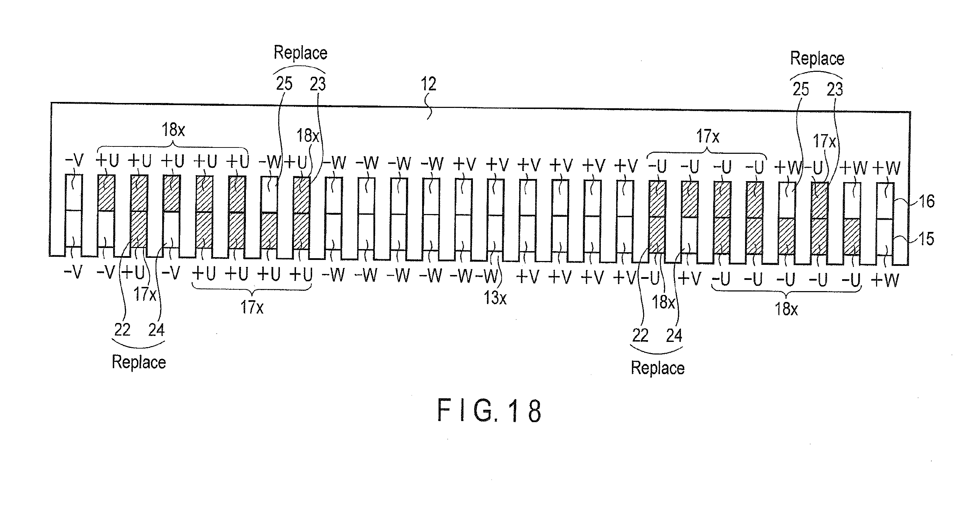

FIG. 17 is a developed schematic diagram showing one phase of an armature winding of a rotating electrical machine according to the sixth embodiment. FIG. 18 is a developed schematic diagram showing a portion of a cross section of an armature of a rotating electrical machine according to the same embodiment.

In the sixth embodiment, compared with the fourth embodiment, the coil pieces 22 to 25 replaced with a different phase are changed.

Specifically, four jumper wires 20a are provided per phase at a connection side coil end 19a of each of the phase belts 17x and 18x, and eight jumper wires 20b are provided per phase at a counter-connection side coil end 19b. In FIGS. 17 and 18, in a 5-coil phase belt 17x, an upper coil piece 22 in an innermost position and a lower coil piece 23 in an innermost position from the center of the phase are replaced with an upper coil piece 24 and a lower coil piece 25 of a 6-coil phase belt of an adjacent different phase, respectively. In a 6-coil phase belt 18x, an upper coil piece 22 in an outermost position and a lower coil piece 23 in an outermost position from the center of the phase belt are replaced with an upper piece 24 and a lower coil piece 25 of a 5-coil phase belt of an adjacent different phase, respectively. The above configuration is the same as those of the fourth embodiment except for the positions to replace the coil pieces 22 to 25.

Table 8 shows the relationship between a coil pitch and a winding coefficient of each order space in the sixth embodiment.

Comparing Table 8 with Table 5, fifth-order and seventh-order space winding coefficients are reduced to less than 10% when a coil pitch is 12 to 14 in the sixth embodiment, and a second-order space winding coefficient is lower than a value of coil pitch 13 and 14 in a conventional example shown in Table 5. Therefore, in the sixth embodiment, second-order space harmonic component of a magnetic flux formed by an armature current can be reduced.

Table 8 Relationship between coil pitch and winding coefficient in the sixth embodiment

| Coil pitch | 11 | 12 | 13 | 14 | 15 | 16 | 17 |
|---|---|---|---|---|---|---|---|
| Basic wave winding coefficient | 0.8119 | 0.8529 | 0.8862 | 0.9114 | 0.9284 | 0.9369 | 0.9370 |
| Second-order space winding coefficient | 0.0196 | 0.0096 | 0.0007 | 0.0110 | 0.0209 | 0.0301 | 0.0381 |
| Fifth-order space winding coefficient | 0.1067 | 0.0770 | 0.0302 | 0.0233 | 0.0717 | 0.1041 | 0.1133 |
| Seventh-order space winding coefficient | 0.0100 | 0.0377 | 0.0492 | 0.0397 | 0.0132 | 0.0189 | 0.0430 |

As described above, in the sixth embodiment, in a 5-coil phase belt 17x, an upper coil piece 22 in an innermost position and a lower coil piece 23 in an innermost position from the center of the phase belt are replaced with an upper coil piece 24 and a lower coil piece 25 of a 6-coil phase belt of an adjacent different phase, respectively. In a 6-coil phase belt 18x, an upper coil piece 22 in an outermost position and a lower coil piece 23 in an outermost position from the center of the phase belt are replaced with an upper coil piece 24 and a lower coil piece 25 of a 5-coil phase belt of an adjacent different phase, respectively. With the above configuration, a second-order space harmonic component of a magnetic flux is reduced by decreasing a winding coefficient as in the fourth embodiment. Therefore, in the armature winding of the rotating electric machine having 66 slots 4-pole 3-phase, an electromagnetic excitation force of a 4-pole component (2-diameter node mode) induced by a magnetic flux generated by an armature current is decreased, vibration of an armature core is decreased, and the reliability is increased. Specially, the winding coefficient can be minimized by setting a coil pitch to 13.

In the sixth embodiment, more jumper wires 20a may be required at the connection side coil end and more jumper wires 20b may be required at the counter-connection side coil end, as compared with the fourth embodiment. However, the sixth embodiment is advantageous in that the second-order space harmonic component can be reduced significantly, and the reduction of the second-order space harmonic component can be expected in a wide range where coil pitches are 12-14. For example, the number of nonstandard connections using jumper wires 20a and 20b may be increased to 12 per phase, but the second-order space harmonic component can be reduced to approximately 5% in comparison with the case of coil pitch 14 representing the conventional art.

The embodiment is not limited to the configuration shown in the diagrams. The function and effect are the same even when a lead-out position is changed from that shown in the diagrams. Further, in FIG. 17, two parallel windings are formed by connecting two sets of circuit including 5-coil and 6-coil phase belts 17x and 18x in parallel. The same function and effect can be obtained even when an armature winding is formed by connecting two sets of circuit in series.

<Seventh embodiment>

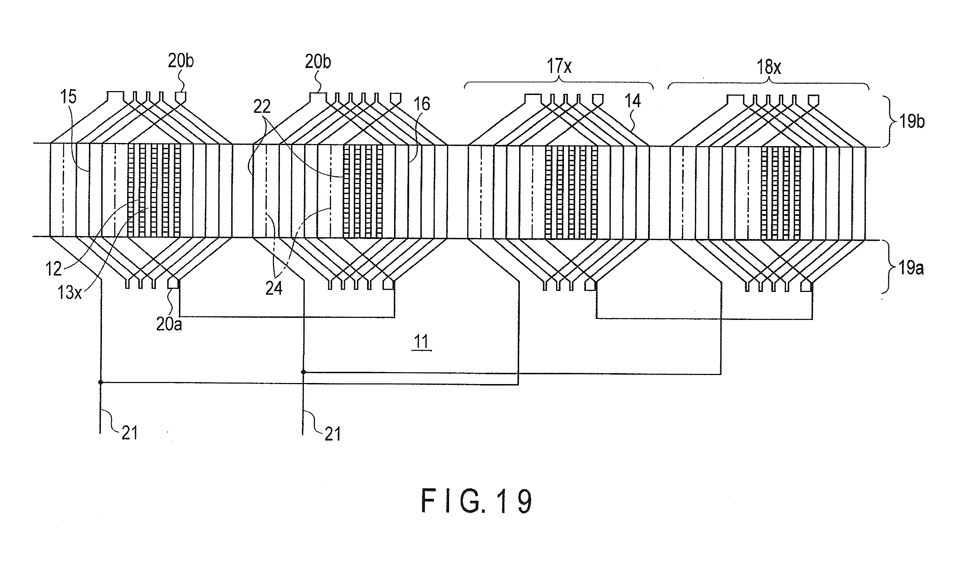

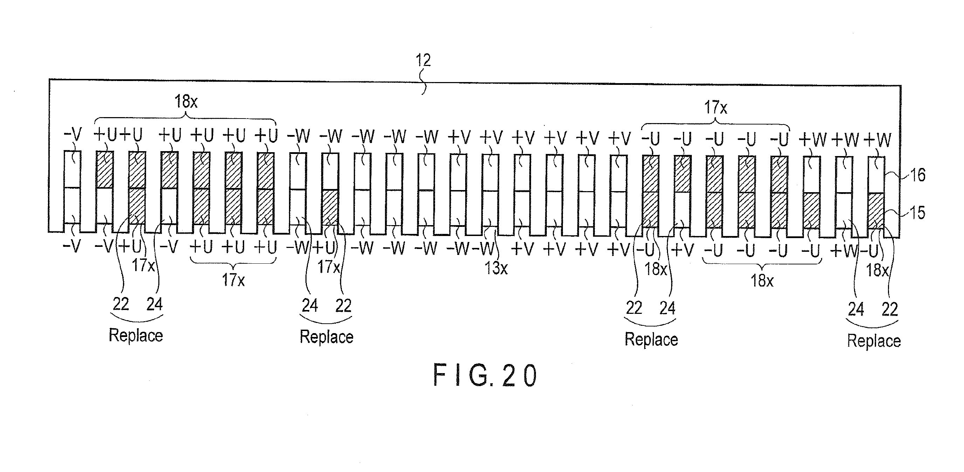

FIG. 19 is a developed schematic diagram showing one phase of an armature winding of a rotating electrical machine according to the seventh embodiment. FIG. 20 is a developed schematic diagram showing a portion of a cross section of an armature of a rotating electrical machine according to the same embodiment.

In the seventh embodiment, compared with the fourth embodiment, the coil pieces 22 and 24 replaced with a different phase are changed.

Specifically, four jumper wires 20a are provided per phase at a connection side coil end 19a of each of the phase belts 17x and 18x, and eight jumper wires 20b are provided per phase at a counter-connection side coil end 19b. In FIGS. 19 and 20, in a 5-coil phase belt 17x, an upper coil piece 22 in an innermost position and an upper coil piece 22 in an outermost position from the center of the phase are replaced with upper coil pieces 24 of a 6-coil phase belt of an adjacent different phase, respectively. In a 6-coil phase belt 18x, an upper coil piece 22 in an innermost position and an upper coil piece 22 in an outermost position from the center of the phase belt are replaced with upper pieces 24 of a 5-coil phase belt of an adjacent different phase, respectively. The above configuration is the same as those of the fourth embodiment except for the positions to replace the coil pieces 22 and 24.

Table 9 shows the relationship between a coil pitch and a winding coefficient of each order space in the seventh embodiment.

Comparing Table 9 with Table 5, fifth-order and seventh-order space winding coefficients are reduced to less than 10% when a coil pitch is 15 in the seventh embodiment, and a second-order space winding coefficient is lower than a value of coil pitch 13 and 14 in a conventional example shown in Table 5. Therefore, in the seventh embodiment, second-order space harmonic component of a magnetic flux formed by an armature current can be reduced.

Table 9 Relationship between coil pitch and winding coefficient in the seventh embodiment

| Coil pitch | 11 | 12 | 13 | 14 | 15 | 16 | 17 |
|---|---|---|---|---|---|---|---|
| Basic wave winding coefficient | 0.8124 | 0.8533 | 0.8865 | 0.9116 | 0.9285 | 0.9370 | 0.9370 |
| Second-order space winding coefficient | 0.0367 | 0.0321 | 0.0263 | 0.0196 | 0.0123 | 0.0052 | 0.0052 |
| Fifth-order space winding coefficient | 0.1050 | 0.0911 | 0.0813 | 0.0859 | 0.0998 | 0.1103 | 0.1103 |
| Seventh-order space winding coefficient | 0.0602 | 0.0358 | 0.0801 | 0.1058 | 0.0911 | 0.0465 | 0.0465 |

As described above, in the seventh embodiment, in a 5-coil phase belt 17x, an upper coil piece 22 in an innermost position and an upper coil piece 22 in an outermost position from the center of the phase belt are replaced with upper coil pieces 24 of a 6-coil phase belt of an adjacent different phase, respectively. In a 6-coil phase belt 18x, an upper coil piece 22 in an innermost position and an upper coil piece 22 in an outermost position from the center of the phase belt are replaced with upper coil pieces 24 of a 5-coil phase belt of an adjacent different phase, respectively. With the above configuration, a second-order space harmonic component of a magnetic flux is reduced by decreasing a winding coefficient as in the fourth embodiment. Therefore, in the armature winding of the rotating electric machine having 66 slots 4-pole 3-phase, an electromagnetic excitation force of a 4-pole component (2-diameter node mode) induced by a magnetic flux generated by an armature current is decreased, vibration of an armature core is decreased, and the reliability is increased. Specially, the winding coefficient can be minimized by setting a coil pitch to 15.

In the present embodiment, the number of nonstandard connections using jumper wires 20a and 20b may be increased to 12 per phase, but the second-order space harmonic component can be reduced to approximately 60% in comparison with the case of coil pitch 14.

The embodiment is not limited to the configuration shown in the diagrams. The same function and effect can be obtained even when upper coil pieces 15 are replaced with lower coil pieces 16 in FIG. 19, and vice versa, an upper coil piece 22 replaced with a different phase is assumed to be a lower coil piece 23 replaced with a different phase, an upper coil piece 24 of a different phase is replaced with a lower coil piece 25 of a different phase, and lower coil pieces 16 are replaced with upper coil pieces 15. The function and effect are the same even when a lead-out position is changed from the diagrams. Further, in FIG. 19, two parallel windings are formed by connecting two sets of circuit including 5-coil and 6-coil phase belts 17x and 18x in parallel. The same function and effect can be obtained even when an armature winding is formed by connecting two sets of circuit in series.

According to at least one of the above-described embodiments, at least one coil piece of the upper and lower coil pieces, provided in at least one of an innermost position and an outermost position from the center of a phase belt of each phase, is replaced with a coil piece of an adjacent phase. With the configuration, in the armature winding of the rotating electric machine having 42 or 66 slots 4-pole 3-phase, an electromagnetic excitation force of a 4-pole component (2-diameter node mode) induced by a magnetic flux generated by an armature current is decreased, vibration of an armature core is decreased, and the reliability is increased.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.  A 3-phase 4-pole 2-layer armature winding (14) of a rotating electrical machine, a winding of each phase of the armature winding (14) forming a series coil, each series coil **characterized by** comprising:

    upper coil pieces (15) and lower coil pieces (16) which are connected each other at a connection side coil end (19a) and a counter-connection side coil end (19b), the upper coil pieces (15) and lower coil pieces (16) being placed in 42 slots (13) provided in an armature core (12),
    at least one coil piece (22 or 23) of the upper and lower coil pieces (15, 16), provided in at least one of an innermost position and an outermost position from the center of a phase belt of each phase, being replaced with a coil piece (24 or 25) of an adjacent phase.

2.  The armature winding (14) of the rotating electrical machine according to claim 1, **characterized in that** in the upper coil pieces (15) or the lower coil pieces (16) of each phase, a coil piece (22 or 23) in an innermost position from the center of a phase belt of each phase is replaced with a coil piece (24 or 25) of an adjacent phase, in a 4-coil phase belt, and a coil piece (22 or 23) in an outermost position from the center of a phase belt of each phase is replaced with a coil piece (24 or 25) of an adjacent phase, in a 3-coil phase belt.

3.  The armature winding (14) of the rotating electrical machine according to claim 1, **characterized in that** in the upper coil pieces (15) or the lower coil pieces (16) of each phase, a coil piece in an outermost position (22 or 23) and a coil piece (22 or 23) in an innermost position from the center of a phase belt of each phase are replaced with coil pieces (24 or 25) of an adjacent phase.

4.  The armature winding (14) of the rotating electrical machine according to claim 1, **characterized in that**
    innermost upper and lower coil pieces (22, 23) in innermost positions from the center of a phase belt of each phase are replaced with coil pieces (24, 25) of an adjacent phase, in a 4-coil phase belt, and
    outermost upper and lower coil pieces (22, 23) in outermost positions from the center of a phase belt of each phase are replaced with coil pieces (24, 25) of an adjacent phase, in a 3-coil phase belt.

5.  The armature winding (14) of the rotating electrical machine according to any one of claims 2 to 4, **characterized in that** a coil pitch is set to one of 10 and 11.

6.  A 3-phase 4-pole 2-layer armature winding (14) of a rotating electrical machine, a winding of each phase of the armature winding (14) forming a series coil, each series coil **characterized by** comprising:

    upper coil pieces (15) and lower coil pieces (16) which are connected each other at a connection side coil end (19a) and a counter-connection side coil end (19b), the upper coil pieces (15) and lower coil pieces (16) being placed in 66 slots (13x) provided in an armature core (12),
    at least one coil piece (22 or 23) of the upper and lower coil pieces (15, 16), provided in at least one of an innermost position and an outermost position from the center of a phase belt of each phase, being replaced with a coil piece (24 or 25) of an adjacent phase.

7.  The armature winding (14) of the rotating electrical machine according to claim 6, **characterized in that** in the upper coil pieces (15) or the lower coil pieces (16) of each phase, a coil piece (22 or 23) in an outermost position from the center of a phase belt of each phase is replaced with a coil piece (24 or 25) of an adjacent phase, in a 6-coil phase belt, and a coil piece (22 or 23) in an innermost position from the center of a phase belt of each phase is replaced with a coil piece (24 or 25) of an adjacent phase, in a 5-coil phase belt.

8. The armature winding (14) of the rotating electrical machine according to claim 7, **characterized in that** a coil pitch is set to one of 13 and 14.

9. The armature winding (14) of the rotating electrical machine according to claim 6, **characterized in that** the coil piece (22 or 23) of the upper and lower coil pieces (15, 16), provided in the innermost position and the outermost position from the center of the phase belt of each phase, being replaced with a coil piece (24 or 25) of an adjacent phase.

10. The armature winding (14) of the rotating electrical machine according to claim 9, **characterized in that** a coil pitch is set to one of 14 to 17.

11. The armature winding (14) of the rotating electrical machine according to claim 6, **characterized in that**
outermost upper and lower coil pieces (22, 23) in outermost positions from the center of a phase belt of each phase are replaced with coil pieces (24, 25) of an adjacent phase, in a 6-coil phase belt, and
innermost upper and lower coil pieces (22, 23) in innermost positions from the center of a phase belt of each phase are replaced with coil pieces (24, 25) of an adjacent phase, in a 5-coil phase belt.

12. The armature winding (14) of the rotating electrical machine according to claim 11, **characterized in that** a coil pitch is set to one of 12 to 14.

13. The armature winding (14) of the rotating electrical machine according to claim 6, **characterized in that** in the upper coil pieces (15) or the lower coil pieces (16) of each phase, a coil piece in an outermost position (22 or 23) and a coil piece (22 or 23) in an innermost position from the center of a phase belt of each phase are replaced with coil pieces (24 or 25) of an adjacent phase.

14. The armature winding (14) of the rotating electrical machine according to claim 13, **characterized in that** a coil pitch is set to 15.

FIG. 1

F I G. 2

F I G. 3

F I G. 4

EP 2 632 028 A2

FIG. 5

FIG.6

EP 2 632 028 A2

Replacement
of outermost

Replacement
of innermost

F I G. 7

FIG. 8

EP 2 632 028 A2

FIG. 9

F I G. 10

EP 2 632 028 A2

FIG.11

FIG. 12

EP 2 632 028 A2

F I G. 1 3

F I G. 14

EP 2 632 028 A2

FIG.15

FIG.16

FIG. 17

FIG. 18

F I G. 1 9

F I G. 2 0

EP 2 632 028 A2